# EUROPEAN PATENT APPLICATION

(11) **EP 4 036 779 A1**
(43) Date of publication of application: **03.08.2022**
(21) Application number: 21154512.4
(22) Date of filing: 01.02.2021
(51) Int. Cl.: G06F 30/13, G06F 30/20, G06F 111/06

(54) **METHOD FOR DEVELOPING AND OPTIMIZATION OF A CONSTRUCTION PROPOSAL**

(71) Applicant: CORA Digital Interior Manufacturing GmbH, 82166 Gräfelfing (DE)
(72) Inventor: ABDELMAHGOUB, Ahmed Mohamed Mohamed Elshafei, 82041 Oberhaching (DE)
(74) Representative: Gritschneder, Sebastian

(57) **Abstract**

The method for computer-assisted design of a construction proposal for a building comprises determining regulations and parameters relevant to the construction site on which one or more buildings are to be put up, creating a logical architectural subdivision of the construction site to obtain a model space, populating the model-space with a random collection of individual genomes, obtaining and evaluating geometrical output for each genome, and optimizing in an iterative process the best solutions within the model-space.

## Description

The present invention relates to a method for computer-assisted design of a construction proposal for a construction site, typically including one or more buildings, and in particular for optimizing such construction proposal based on one or more predefined criteria.

In developing construction proposal for a construction site in dense cities a very important step is to study the nearest surroundings of the plot, in order to enable the best possible degree of architectural usage of the construction site. Many aspects must be taken into account including urban, legislative, environmental and aesthetic factors. These factors, in particular the legislative ones, depend on local regulations.

In traditional, non-computational assisted architecture the architect develops a construction proposal based on his own creative ideas within the boundaries given by the above mentioned factors. The resulting construction proposals are mainly optimized in creative aspects, while environmental or economical aspects, such as use of natural light or maximization of floor space, are seen as secondary factors.

If certain minimum requirements are given with respect to the environmental or economical parameters of a building to be designed, architects usually rely on their professional experience and on established property division methods. If a certain minimum floor space is required, a trial and error approach starting from a maximum building width may be used. While such design processes are costly and not very time effective, the architect may not be sure that the results obtained by such conventional design process is the best possible design for a given building site.

In particular for developing constructional plans for larger industrial or office buildings, already at present computer-based programs are available that represent valuable tools for architects. Such property optimization algorithms enable architects, real estate developers and property owners to make data driven decisions from the integration between the building law rules and the data analysis of the properties. These capabilities open new visions, horizons and decisions to design better properties in terms of space, sustainability and economics.

At present these tools require substantive input in form of manually created preliminary construction proposals from the designer and are merely used in order to optimize these constructional ideas provided by the architect.

It would be desirable to provide a method that helps architects to further optimize a construction proposal.

It would further be desirable to provide a method that significantly accelerates the design process and permits integrating the design process with an optimization process concerning the location of the building or the buildings on the construction site.

It would further be desirable to provide a method that is able to generate constructional design output based on parametric inputs related to the site parameters and based on environmental, architectural and commercial factors.

At least some of the above objectives are obtained by the present invention. The method comprises determining regulations and parameters relevant to the construction site on which a building is to be put up, creating a logical architectural subdivision of the construction site to obtain a model-space, and populating the model-space with a random collection of individual genomes. The method further includes obtaining and evaluating geometrical output for each genome and optimizing in an iterative process the best solutions within the model-space.

The present invention provides a methodology for a computer assisted optimization of the design process and of the process of developing construction proposals. The method of the present invention may herein also be referred to as Property Optimization Algorithm (POA). The optimization of the design may relate to any given parameter or combination of parameters, while it is particular useful for optimizing the maximum achievable floor space for a given construction site. The method of the present invention significantly accelerates the design phase and permits integrating it with an optimization process concerning the location of the building or the buildings on the construction site.

The present invention is advantageously carried out with assistance of a software program. There is a plurality of software products available that allow implementation of the present invention. For example the software Rhinoceros 3D, a 3D CAD modelling software developed by Robert McNeel & Associates, may be used. This software allows to model the construction site as well as its periphery, and further allows to include the definitions of the regulations and parameters of the construction site. For the software Rhinoceros 3D several additional applications so-called Plug-Ins exist, which extend its functionality. One of these is the Plug-In Grasshopper which allows for algorithmic modelling and which therefore may be advantageously used in carrying out the method of the present invention.

The method of the present invention allows developing optimized construction proposals based on boundary conditions of the construction site. These boundary conditions may be invariable conditions, like legal regulations and geometric parameters of the construction site. Additional variable conditions may be used in order to influence the design process.

The expression "construction site" is used herein to denote a cadastral area on which one or more buildings are to be erected.

The expression "construction proposal" is used herein to denote a proposal for the development of a construction site, indicating in particular those areas on which one or more buildings may be erected and those areas which are to be kept free of any buildings.

The regulations and parameters of the construction site may comprise one or more of geometrical input, site regulation input and architectural input.

Geometrical input may comprise one or more of the building outline, construction site outline, or distance spacing outline.

Site regulation input may comprise the definition of site edges, dimensions of neighbouring buildings, building related laws and regulations. In Germany such building related laws are for example coded in the "Baugesetzbuch (BauGB)". In particular §§34 and 35 BauGB include definitions and limitations that are to be heeded in developing construction proposals. Analogous regulations exist in most jurisdictions and may be included in the method of the present invention.

Architectural input may comprise one or more of the building type, building width, floor height, floor number, external distance spacing, internal distance spacing, pyramid method, fixed edges or other mandatory fixed dimensions. In particular the architectural input may additionally include further parameters, which might be desirable in architectural respect. The method of the present invention also allows for integrating additional creative proposals and suggestions, which may stem in particular from an architect or which might be desirable for any other reason.

One of the goals of the present invention is to find the optimal balance between the form, the length, the width and the number of floors/height of a building such that a building with the maximum floor space can be determined for a given construction site. Some of the dimensions of the building are directly limited by the size of the construction site. The building to be planned can of course not be longer than the construction site itself. Some of the dimensions may be limited by the applicable building regulations. For example, a local building regulation may require that the maximum width of a building must be below a maximum width of 16 m.

Other dimensions, such as the height of a building may be directly limited by local building regulations, but may also be indirectly limited. Such indirect limitation may be a distance spacing regulation, which interrelates the height of a building with a mandatory distance spacing.

Since the achievable floor space largely depends on the applicable building regulations as well as on the shape of the building, the building widths, number of floors, and building length, a mathematical relation between these parameters and the applicable building regulations is established.

In a computational loop process these changeable parameters are systematically varied in order to obtain the best possible result, while still taking account of the relationship between each of these parameters.

In order to obtain the best value for the building length the plan of the construction site is divided into a two directional grid and is divided by the equation and relation between the property length.

In a further loop the best division for the building width is determined for each direction of the two directional grid.

For each length and width a maximum building height and thus the maximum number of floors can be determined from the previously defined inputs.

In further loops further parameters may be optimized. For example if a plurality of building elements are to be erected on a given construction site, the distance between the individual building elements may be varied to achieve a better natural light usage.

Also the shape and the arrangement of the one or more buildings may have a significant influence on the achievable floor space. A U-shaped arrangement of buildings may achieve a different maximum floor space than a L-shaped or an I-shaped arrangement. The present invention allows also to take such parameters into account when developing the construction proposals.

Once the maximum width is achieved, an outline offset of the construction site with a different depth may be used in order to check for the best size of the floor space.

The above loops are making use of a generative algorithm engine which allows to generate solutions and to combine between different solutions and between different generations of solutions as will be discussed below.

The method of the present invention uses method steps of combining existing solutions in order to increase fitness of the obtainable results. Some of the method steps bear similarities to method steps that are used to describe biological processes. Accordingly, in the description of the present invention biological terms might be used in order to describe the involved method steps.

A parameter used in definition of a construction proposal to be developed may therefore also be referred to as a "gene".

A set of genes, or in other words a set of parameters used to fully describe a construction proposal may also be referred to as a "genome".

Genomes may be combined with each other to obtain a further "generation" of solutions or genomes. Genomes of the same or of different generations may be combined with each other.

The term "fitness" of a genome refers to the result of an evaluation of such genome. A genome having a high fitness represents a construction proposal that receives a high rating in an evaluation. In order to define the fitness of a genome or a construction proposal, desired criteria have to be chosen. Such criteria may be the maximum achievable floor space, lighting conditions, minimum cost of the project and so on. A fit genome receives a high rating with respect to such criteria.

The method step of populating the model-space with a random collection of individual genomes may include the use of random values for the individual parameters of the genomes. The random values used for the parameters may be randomly selected by a computer program. In general there is no restriction as to how these random values are selected. However, all values have to range of course within the allowed margin defined by the regulations and parameters of the construction site. Advantageously, a computer program is used in carrying out the present invention. Such computer programs readily allow for determination of random values to be used in any subsequent calculations.

In order to limit the model-space further, each of the combination of parameters is always checked for compliance with the limitations of the construction site. Solutions for which each individual parameter would be generally allowable, but in which the combination of the parameters is not allowable are also disregarded. By discarding inadmissible solutions, the model-space is further reduced. This helps to faster obtain the best result for a given construction site.

One strategy to limit the model-space includes defining the maximum allowable building height for each point or area of the construction site. In this way a three-dimensional envelope is defined within which the optimal construction proposal is to be found.

To this end the method of the present invention may subdivide the area of the construction site into a regular grid with sufficiently high density. Reasonable densities may range between 1 and 20 gridlines per meter and can be selected as deemed suitable for a given area of the construction site. For each grid point the maximum allowable building height can be determined from the input parameters and in particular from the distance spacing resulting from the building law regulations. For each point the distance to all borders of the construction site is determined. The distance to each border results in a maximum allowable building height with respect to each of the borders of the construction site. The lowest value of the allowable building height represents the limit for the building height for each point. This process creates a three-dimensional envelope defining the maximum building height for each grid point of the construction site.In a next step the construction site may be subdivided into small building areas comprising a plurality of grid points. The maximum allowable building height is defined by the comprised grid point for which the lowest building height is calculated in the previous step. With this method step the present invention achieves implementation of the so-called pyramid method, in which the allowable building height for a given building area tends to get smaller, the closer the respective building element is located to a border of the construction site.

The plot subdivision is based on the architectural needs which help to increase the usage of the available space of a given construction site in housing or commercial building projects. Definition of the three-dimensional envelope defining the maximum building height may be sufficient for single building elements that are to be erected on a given construction site. However, for construction sites for which more complex building proposals are to be developed, the definition of the three-dimensional envelope may be used together with the further method steps described herein, in order to automatically develop optimized construction proposals, which offer for example the maximum available floor space.

The quantity of the random genomes used for initially populating the model-space can be freely chosen by the user. The more random genomes are used, the higher is the initial population of the model-space and the faster genomes with high fitness may be identified. However, the more genomes are used, the more calculations have to be carried out. Depending on the size of the construction site and depending on the size of the parameter range a set of 1000 to 10000 genomes, and preferably a set of between 2000 and 5000 genomes has proven to lead to sufficient results of the present method.

The randomly selected genomes represent the first generation of genomes used in the method of the present invention. These randomly selected genomes are evaluated in view of any desired criteria as discussed above. For each of these genomes the fitness is determined. The fitness may be determined in view of one or more desired properties of the building to be constructed, such as maximum floor space, lighting condition, or minimum cost. Additional or alternative properties may be chosen depending on the needs, wishes and requirements of the particular project. The desired properties of the building may also be weighed during evaluation in order to obtain a fitness value.

Once the first generation of the random genomes are evaluated, a selection may be made in order to find those genomes that are considered to be suitable prospects for further optimization. Typically the genomes are sorted based on the achievable floor space. However, any other parameters may be chosen via which the fitness of the genomes is to be determined.

In order to carry out such selection the genomes may be hierarchically ordered from fittest to lamest. In the further process of the present invention only the top 30% of the genomes having the highest fitness may be considered. Preferably only the top 20% or only the top 10% of the genomes having the highest fitness may be considered. Alternative selection mechanisms may be chosen if considered to be suitable.

The selected genomes of the first generation may then be further optimized in an iterative process by combining the best solutions of a generation of solutions with genomes of the same or a different generation by using coupling algorithms, coalescence algorithms, generative algorithms and/or mutation algorithms.

The coupling algorithms refer to the process of finding for a given genome a suitable other genome for an evolutionary combination. In finding a suitable partner, any desired criteria may be applied. A particularly suitable criterion may be a genomic distance criterion. According to such criterion, a selected genome may be coupled only to another genome which is within a certain pre-defined distance from the selected genome in the model-space. The distance criterion may be applied in a variety of way. For example a selected genome may only be coupled to genomes in the direct vicinity within the model-space. To this end, the distance criterion may encompass only those potential partner genomes that lie within a pre-defined genomic distance from the selected genome. The other extreme of the distance criterion may be to exclude every genome that is within a certain pre-defined distance from the selected genome in the model-space. Both of these extreme criteria have advantages and disadvantages. If genomes are too similar to each other, the resulting genome may also be similar and the evolution may get stuck in a local fitness maximum. If genomes are too different, they may become incompatible and the resulting genomes may suffer from rather low fitness.

An additional and balanced option between those two extremes may rely in coupling a selected genome to other genomes that have at least a required minimum distance but that are still within a maximum distance. Such range criterion may ensure that the coupled genomes are still similar enough to allow a meaningful combination, and at the same time are different enough to allow a positive evolution towards fitter offsprings to take place.

The combination of two genomes may be carried out using specific coalescence algorithms. Such coalescence algorithms are used to describe and carry out the coupling process of two genomes in order to evolve the design process. The coalescence algorithms may include crossover coalescence, blend coalescence, or weighed coalescence.

Crossover coalescence refers to a coalescence process, in which the offspring inherits a number of genes from one genome and the remaining number of genes from the other genome. The individual gene values are maintained and only combined differently as compared to the parent genomes.

Blend coalescence refers to a coalescence process, in which the gene values of the parents are combined with each other. For example the gene values may be averaged. In this way all gene values of the offspring are an average of the respective gene values of the parent genomes.

Crossover and blend coalescence may also be weighed based on the fitness of the parent genomes. If one parent genome has an increased fitness, a larger part of the fitter parent genome may be used in crossover coalescence. In the same way, a higher weighing factor may be applied to the gene values of a fitter parent genome, in blend coalescence. By weighing the gene values based on the fitness of the parents, it may be ensured that the fitter parent genome is better reproduced in the offspring genome such that the positive characteristics of the fitter genome are better inherited.

The present method may also include generative algorithms. The generative algorithm refers to the concept of generating in an iterative process a plurality of generations of genomes. As discussed above the method starts with a random population of genomes that are distributed over the model-space. By using the above described mating algorithms new generations of genomes are developed based on the initial randomly selected genomes. The number of generations is generally not limited and may range to up to over 100 or over 1000 generations. The number of generations that are required to find the fittest genomes again largely depends on the size of the model-space and the free parameters used to describe each genome.

The generative algorithm may be used to increasingly populate the model-space. The mating algorithm may allow selecting and combining genomes from the same or from different generations of genomes.

Using the above described processes of combining genomes with each other a iterative process is defined in which from generation to generation the genome is optimized using the above described combination methods. After each combination step the resulting new generation of genomes is evaluated in order to identify the best genomes and to further evolve these best genomes.

Once the best, i.e. the fittest, solutions are identified the user may optimize the solutions based on one or more criteria. For example a user may be interested in finding a genome or construction proposal that offers the maximum floor space, only. In this case, the optimization algorithm is rather simple and will output in hierarchically order those genomes or construction proposals that lead to the maximum floor space.

Results based on only a single property are usually not desired, since they often include drawbacks such as significantly increased building costs. Thus, typically a user is interested in a balanced solution, in which maximum floor space is achieved while building costs and/or the environmental fitness are within a certain range. In order to find such optimized solutions, an additional optimization method step or optimization algorithm is used.

The method may therefore include creating a database for all the geometrical outputs of the method based on the initially defined input parameters. Based on these calculated and stored solutions, the optimization algorithm may readily find the best solutions based on the fitness criteria chosen by the user.

The method of the present invention may output the solutions in any desired form. Such output may advantageously include floor outlines, 3D modelling of the construction proposals, floor space values, footprint dimensions, estimated costs, lighting condition, and natural light usage. Additional values of interest may be indicated.

The method may allow an architect to choose between outputs from different generations. In the end the interest lies in the identification of the construction proposal that is considered to be the most desirable one. It is only of reduced importance whether this result was obtained already in one of the first generations of the subdivision loop or whether the result is obtained at a later stage of the calculation.

Features described in relation to one embodiment may equally be applied to other embodiments of the invention.

The invention will be further described, by way of example only, with reference to the accompanying drawings in which:
Fig. 1 shows a schematic overview over the method steps of the present invention;
Fig. 2 shows an exemplary construction site in a densely populated city;
Fig. 3 shows the construction site with distance spacing;
Fig. 4 shows the construction site with distance spacing and two-dimensional raster;
Fig. 5 shows a top view and a side view of a possible solution of a construction proposal;
Fig. 6 shows a top view and another side view of the solution of Fig.5;
Fig. 7 illustrates the process of population of the model-space;
Fig. 8 illustrates the process of finding compatible mating genomes in the model-space;
Fig. 9 shows a possible output of the method; and
Fig. 10 shows an enlarged view of the output of the method including 3D display of the construction and a characteristic dataset of the displayed solutions.

The present invention is advantageously carried out with assistance of a software program. In the depicted examples the software Rhinoceros 3D, a 3D CAD modelling software is used. This software allows to model the construction site and to include the definitions of the regulations and parameters of the construction site. The software Rhinoceros 3D is used with the Grasshopper Plug-In, which allows for algorithmic modelling and which is used for modelling the various algorithms of the method of the present invention.

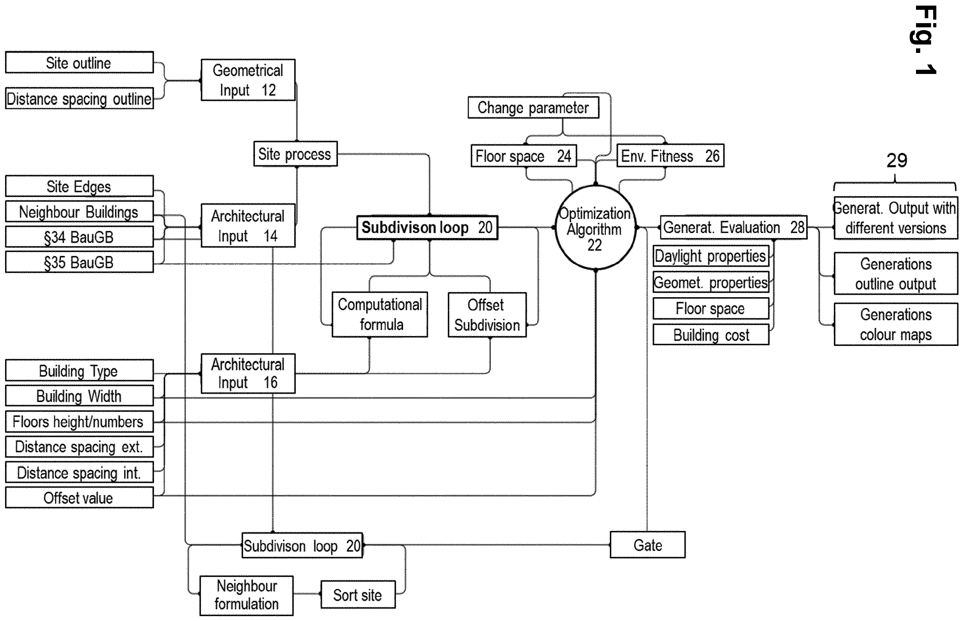

Fig.1 shows a work flow diagram illustrating the main method steps of the present invention. Initially, the regulations and parameters of the construction site are determined. These regulations and parameters of the construction site comprise geometrical input 12, site regulation input 14 and architectural input 16. In this example a building site in Germany is considered, so the site regulation input 14 includes in particular German building law regulations.

The various inputs 12, 14, 16 are processed in a subdivision loop 20 to find those solutions that comply with all input parameters. The subdivision loop 20 outputs a plurality of solutions that define a model-space. The model-space comprises all solutions for a given input parameter set.

In order to find the best possible solutions, the output from the subdivision loop 20 is processed with an optimization algorithm 22. The optimization algorithm 22 is used to find the best solutions based on one or more criteria selected by the user. In Fig. 1 the chosen criteria are the floor space 24 and the environmental fitness 26. The environmental fitness 26 includes daylight properties and other parameters relating to the use of natural light of the respective construction site. The optimization algorithm 22 thus tries to find those solutions that offer the largest floor space 24 and at the same time has the best environmental fitness 26.

The best results identified by the optimization algorithm 22 are then evaluated in a generations evaluation step 28 taking into account various parameters that are of particular interest in a building project. Such parameters typically include the building cost and floor space, but also geometrical properties and daylight properties. The best solutions are outputted in an output step 29 together with a building plot and the relevant building parameters. They may then serve as a basis for the principal to make the decision on the further building plans.

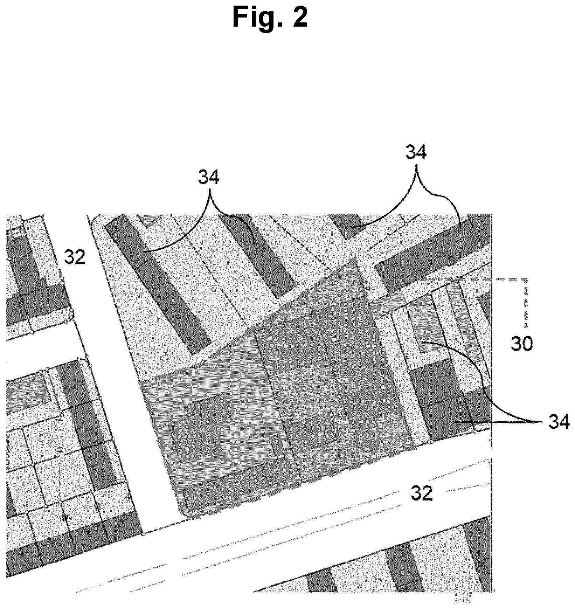

Figs. 2 to 6 are used to further illustrate the general working principle of the subdivision loop 20 of the method of the present invention. The subdivision loop 20 initially has to be provided with the above-mentioned available input parameters 12, 14, 16.

Fig. 2 shows an exemplary extract from a cadastral land register comprising a project area in which a building is to be erected. The construction site 30 has a non-rectangular shape and is surrounded by streets 32 and neighbouring buildings 34.

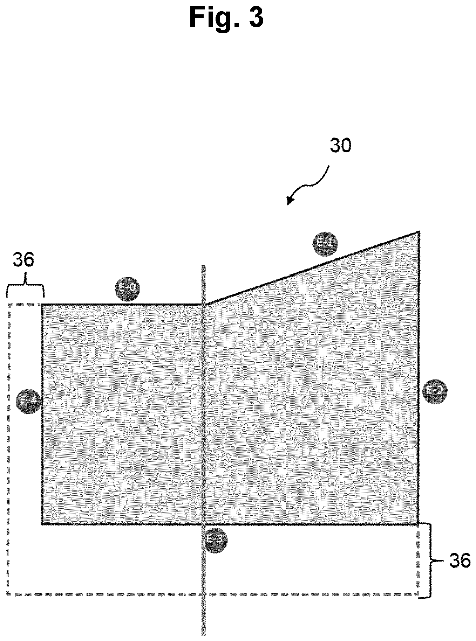

The outline of the construction site 30, as depicted in Fig.3, represents the geometrical data of the construction site, and serves as main geometrical input 12 for the subdivision loop 30. In Fig. 3 the individual edges of the construction site 30 have been assigned with an edge numbering from E-0 to E-4. The two edges E-3 and E-4 are adjacent to streets 32. The required distance spacing 36 for these edges therefore may extend over the outline of the construction site 30 as indicated with the dotted line in Fig. 3.

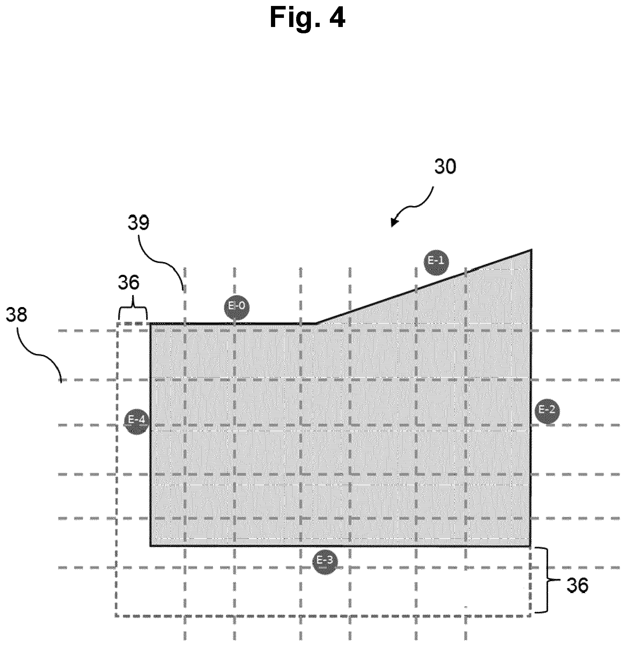

In Fig. 4 it is illustrated that the construction site 30 is partitioned into a raster grid by grid lines 38 that run parallel to the main edges E-2 and E-4 as well as by grid lines 39 that run parallel to the main edges E-0 and E-3 of the construction site 30. The spacing of the grid lines 38, 39 in general is completely arbitrary and will be varied by the subdivision loop 20 to cover all possible solutions. However, at this stage the subdivision loop 20 also may take into account any architectural input 16 such as a required minimum number of floors or a desired range of the building width. By successively varying the dimensions of the building(s) to be erected, a plurality of possible solutions is obtained.

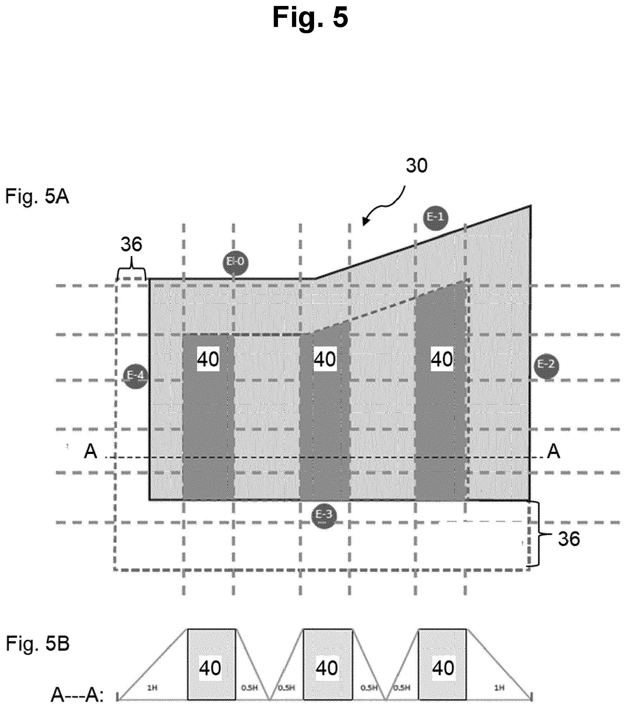

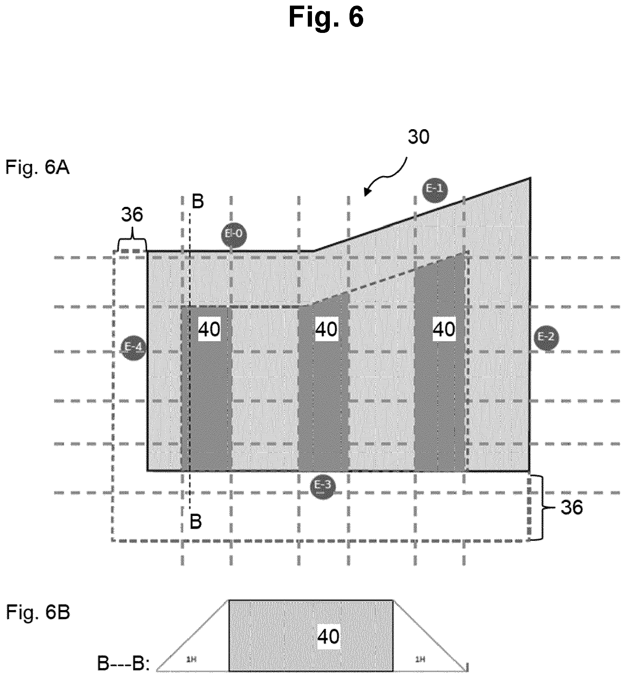

One possible solution is depicted in Figs. 5 and 6. The construction comprises three parallel arranged buildings 40. The base area of each building 40 is depicted in the top views of Figs. 5A and 6A. Figs. 5B and 6B are cross-sectional side views along the lines A-A and B-B of Figs. 5A and 6A. In these side views the heights of the buildings 40 are indicated. It can be further seen that the distance spacing is sufficient to conform to the relevant building regulations of the German building code. The distance of the building walls to the outline of the construction site corresponds to 1 H and therefore meets the applicable distance spacing regulations. As indicated in Fig. 5B, the distance between the buildings corresponds to 0.5H for each building, which is also in agreement with the applicable distance spacing regulations. The solution depicted in Figs. 5 and 6 thus is one exemplary solution that satisfies all legal and factual requirements as derived from the various input parameters 12, 14, 16. Of course this is only one solution from a large number of possible solutions that are all determined by the subdivision loop 20.

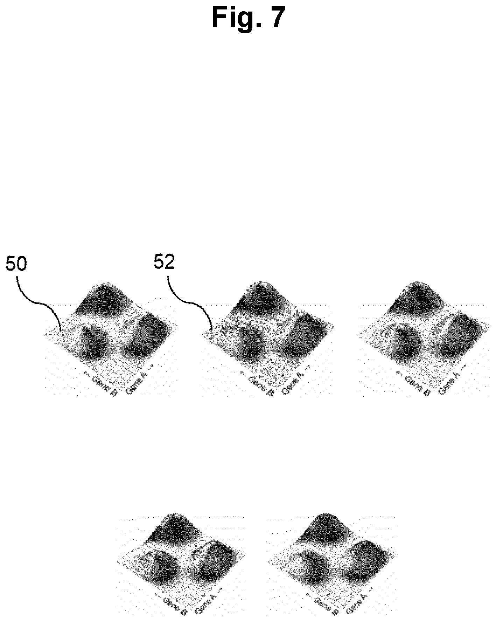

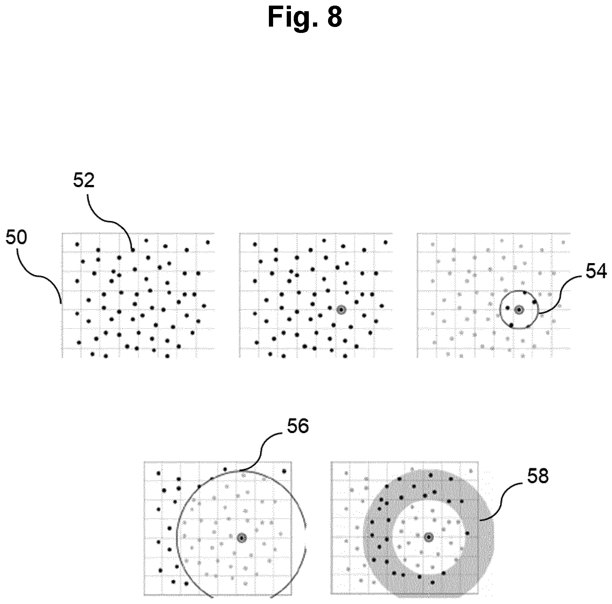

In order to find suitable solutions, the subdivision loop 20 uses a process as explained on a general level with the use of Figs. 7 and 8. A construction proposal (genome) is considered to be defined by a number of individual parameters (genes). Typically a construction proposal consists of a large number of parameters. However, to be able to visually illustrate the general process of the method of the present invention, it is assumed in Figs. 7 and 8 that a construction proposal or genome consists only of two parameters (genes) A and B, only. Genes A and B represent the X and Y axis of a three dimensional model space depicted in Fig. 7. The Z-axis represents the fitness of each individual genome. The higher the fitness factor, the better the solution.

In this example. the fitness of each solution is determined by the maximum available floor space. The higher the available floor space, the higher the fitness of the respective solution.

In the first view of Fig. 7 the model-space 50 including maxima and minima of fitness is already depicted. However, this shape of the model-space 50 is initially unknown and needs to be explored by the user. For this purpose, the model-space 50 is initially populated with a random collection of individual genomes. This situation is depicted in the second view of Fig. 7. The red dots 52 correspond to individual genomes that are randomly distributed over the model-space 50. A fitness value is determined for each of these solutions. This random selection typically already shows peaks and valleys of the fitness value. In successive steps the individual parameters of the fittest genomes are varied in order to find even fitter genomes.

This variation is repeated several times, wherein each repetition represents a new generation of genomes or solutions. By discarding weak results and by varying the parameters of fitter genomes, the resulting solutions will cluster around the actual peak values, as is schematically depicted with views 3 to 5 of Fig. 7. This procedure is repeated until a satisfying result is obtained.

For the variations of the parameters a plurality of known strategies may be applied. Such strategies are exemplarily depicted and explained with Fig. 8. Fig. 8 shows the principle of a coupling algorithm in which for a given genome one or more coupling mates are identified. The first view of Fig. 8 shows a randomly distributed number of solutions or genomes. The genomes are indicated as black dots 52 in the model-space 50. In the second view of Fig. 8 a particularly fit solution or genome is marked with a circle. In order to find an even better solution, this genome may be combined with the genomes of one of the next neighbours, as depicted in the third view of Fig. 8. Those genomes are considered as next neigbhours, which lie within a circle 54 having a certain radius in the model-space 50. A combination of these fit genomes may lead to an even better genome.

If this strategy does not lead to a sufficient result, a strong mutation of the genome might have to be carried out. A corresponding strategy of combining genomes is depicted in the fourth view of Fig. 8. In this case, a fit genome is combined with a rather distant genome. In this case any combination of the initial genome with any solution outside a certain distance as indicated by circle 56 may be used for to develop a new generation genome.

A balanced combination of these two rather extreme strategies is depicted in the fifth view of Fig. 8 in which combinations are made between solutions that are within a certain distance region 58. In this alternative, a minimum and a maximum distance is defined, and the selected genome is only combined with other genomes being in this defined distance range 58. This distance range 58 is marked by the annular region of the fifth view of Fig. 8. By using these strategies a promising combination of two genomes 52 may be carried out. The offspring genome resulting from this combination, may represent a better solution than the two parent genomes.

In the example depicted in Figs. 2 to 6 a genome consists of more than only two parameters. In fact the parameters include at least the building width, building height, floor space, distance between buildings, orientation of the building to name just a few of these parameters. However, in mathematical respect a multidimensional model-space may be equivalently handled as the model-space depicted in Figs. 7 and 8.

The optimization algorithm 22 as depicted in Fig. 1 uses the maximum floor space 24 and the environmental fitness 26 as the factors that determine the overall fitness of the solution. These factors may be correlated and weighed in order to establish a hierarchy from fittest to lamest genome.

Once all solutions are determined by the subdivision loop 20, the results are further evaluated and optimized using the optimization algorithm 22. During this method steps the best results are identified. What is defined as a best result is determined by taking into account various circumstances of the project. In the method as depicted in Fig. 1 the optimization is based on the maximum floor space 24 and the environmental fitness 26 of the building. During the optimization algorithm 22, those solutions are identified that reflect the best balances between these two criteria. The optimization algorithm 22 determines the best solutions by identifying those solutions that at the same time offer maximum floor space 24 and highest environmental fitness 26.

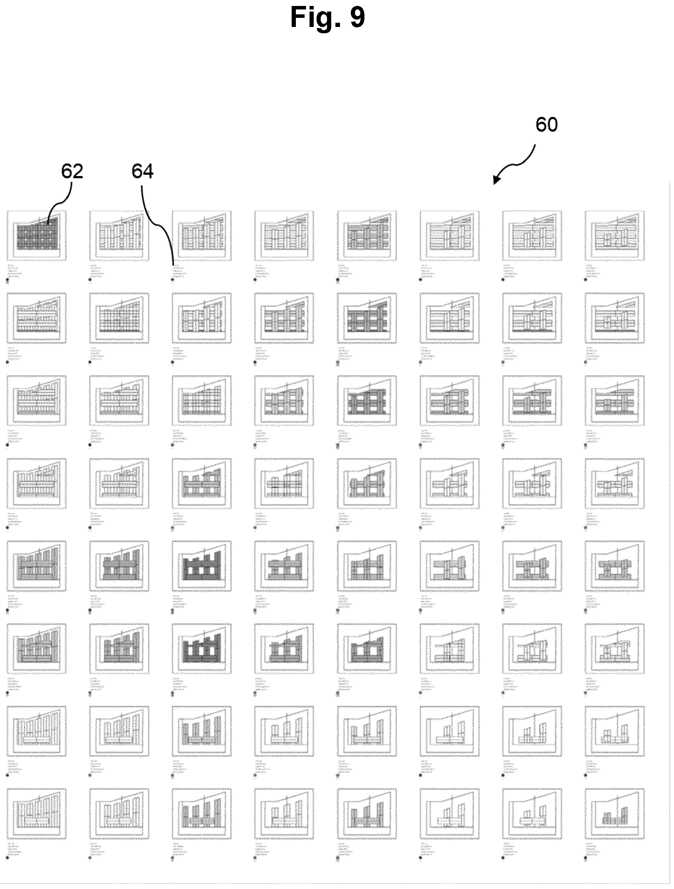

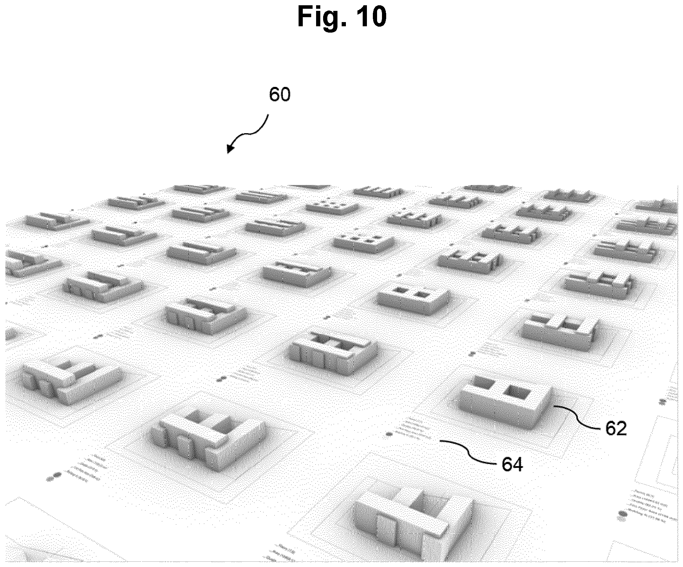

At the end of the method a list of for example the best 100 solutions may be obtained. These solutions may be sorted in an overview map 60 as depicted in Figs. 9 and 10. A small view of the calculated construction proposals 62 together with a list of design parameters 64 for each construction proposal may be provided. The solutions may be provided as 2D or 3D views to give an as realistic as possible impression of the calculated solutions.

The presentations as shown in Figs. 9 and 10 give a thorough and detailed overview of the possible solutions. A potential principal may select the most appropriate of the solutions based on subjective and objective data presented in these overviews.

Once a decision is made on the basis of the calculated solutions, the construction proposals may be refined to increase visual appearance and/or other design aspects of the building plan.

## Claims

1. Method for computer-assisted design of a construction proposal for a building comprising:
• determining regulations and parameters relevant to the construction site on which one or more buildings are to be put up,
• creating a logical architectural subdivision of the construction site to obtain a model-space,
• populating the model-space with a random collection of individual genomes,
• obtaining and evaluating geometrical output for each genome,
• optimizing in an iterative process the best solutions within the model-space.

2. Method according to claim 1, wherein the regulations and parameters of the construction site comprise one or more of geometrical input, site regulation input and architectural input.

3. Method according to claim 2, wherein the geometrical input comprises one or more of the property outline, construction site outline, distance spacing outline.

4. Method according to claim 2, wherein the site regulation input comprises one or more of the site edges, dimensions of neighbouring buildings, building related laws and regulations.

5. Method according to claim 2, wherein the architectural input comprises one or more of the building type, building width, floor height, floor number, external distance spacing, internal distance spacing, pyramid method, fixed edges or other mandatory fixed dimensions.

6. Method according to any one of the preceding claims, wherein the step of populating the model-space with a random collection of individual genomes includes to use random values for the individual parameters of each random genome.

7. Method according to any one of the preceding claims, wherein the step of obtaining and evaluating geometrical output for each genome includes a determination of the fitness for each of these random genomes, wherein fitness is determined from a correlation of desired properties of the building, such as maximum floor space, lighting condition, minimum cost.

8. Method according to claim 7, wherein the desired properties of the building are weighed during correlation to obtain a fitness value.

9. Method according to any one of the preceding claims, wherein the genomes are hierarchically ordered from fittest to lamest.

10. Method according to any one of the preceding claims, wherein the solutions are optimized in an iterative process by combining the best solutions of a generation of solutions with genomes of the same or a different generation by using coupling algorithms.

11. Method according to any one of the preceding claims, wherein coalescence algorithms are used to couple mating genomes in order to evolve the design process.

12. Method according to any one of the preceding claims, wherein optimizing in an iterative process the best solutions within the model-space includes using a generative algorithm engine to generate and combine between different generations of genomes.

13. Method according to any one of the preceding claims, wherein the output includes floor outlines, floor numbers, 3D modelling of construction proposals, floor space values and footprint dimensions.

14. Method according to any one of the preceding claims, wherein the method allows an architect to choose between outputs from different generations.

15. Method according to any one of the preceding claims, wherein the method includes creating a database for all the geometrical outputs based on the property dimensions and angles, neighbours data and site regulations.
